# EUROPEAN PATENT APPLICATION

(11) **EP 1 237 157 A2**
(43) Date of publication of application: **04.09.2002**
(21) Application number: 02003149.8
(22) Date of filing: 14.02.2002
(51) Int. Cl.: G11B 20/00, G06F 17/60

(54) **Digital information storage system and digital information delivery system**

(30) Priority: 16.02.2001 JP 2001039940
(71) Applicant: Pioneer Corporation, Tokyo-to (JP)
(72) Inventor: Shibasaki, Hiroaki, Tokyo-to (JP)
(74) Representative: Klingseisen, Franz, Dipl.-Ing.

(57) **Abstract**

A digital information storage system(60) has a storage (62). A user bought the digital information from a server(40) built on a network(1) by using a user device(20) and possesses it in the storage(62). The system(60) has a host-function device(68) as well. The host-function device(68) operates based on a command coming from the user device(20) through the network(1) and duplicate conditions of the stored digital information. The host-function device(20) enables not only the delivery (output) of the storage-stored digital information to the user device(20) via the network(1) but also the return (input) of the digital information from the user device(20) to the storage via the network(1).

## Description

### BACKGROUND OF THE INVENTION

### Field of the Invention:

The present invention relates to a network-connected information delivery system capable of protecting copyright of digital works and enhances convenience for users who have access to the system, and in particular, to the system that has the capability of raising the degree of freedom in duplicating digital works to which a limited number of times of duplications carried out through a user device is assigned.

### Description of Related Art:

Recently, the progress in personal computers, Internet-related techniques, and data compression techniques including MP3 (MPEG Audio Layer 3), ATRAC 3 (Adaptive TRansform Acoustic Coding 3), WMA (Windows Media Audio) and TwinVQ has been remarkable. Such progress makes it possible that pieces of digital information such as music are delivered to users through a computer-communication network such as the Internet and mobile unit communication networks. In addition, the progress also allows delivered digital information to be stored into compact and light mobile type of user devices (for example, cellular phone, PHS(Personal Handy phone System), and PD (Portable Device) so that users read and view such digital information.

Digital data have the character that information will not be lost even when their duplications are repeated. Hence, illegal duplications, which lowers benefit that should be given authors, are apt to be done easily. In order to improve this problem, there have been proposed a variety of rules or systems that impose a limitation on the number of duplicate times assigned to information to be delivered.

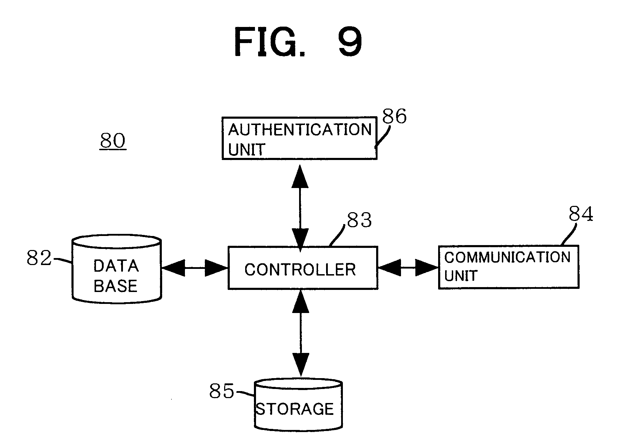

Fig. 9 exemplifies a digital music-information delivery system on the Internet. This system operates based on a known rule of SDMI (Secure Digital Music Initiative), which is one of the rules to control the number of duplicate times assigned to digital information of which copyright is preserved.

As shown in the figure, the delivery system has an EMD (Electronic Music Distribution) server 2 built on the Internet 1, the server 2 being in charge of delivering digital music information (hereafter referred to as "contents") that has been stored. The delivery system also has a host unit 3, which is composed for example a stationary type of personal computer mainly used when a user is at home. In the delivery system, there is also provided a mobile type of user device 4, of which main use is presumably outside the home.

In addition to a modem communication function to be connected with the Internet 1 via a network such as the public telephone line, the host unit 3 has a client function and a host function. The client function is mainly directed to ordering and receiving desired contents to and from the EMD server 2 and notifying the EMD server 2 of information, such as a user's account number, that is required for charge processing. Meanwhile, the host function is based on the SDMI to control the duplication of contents that have been received. The host unit 3 has hardware including a communication unit to realize the above modem communication function, an HDD unit to store therein the received contents, an interface used to duplicate contents toward, for example, the mobile type of user device 4, and a music replay unit to replay the contents. Both the client and host functions are given to the host unit 3 by performing an appropriate measure, such as downloading and installing software programs for those functions from the EMD server 2.

The mobile type of user device 4 has an interface function to duplicate contents with the help of the host unit 3 or a modem function to be connected with the Internet 1 via network means such as mobile unit communication means , besides a client function. The client function is directed to issuance of an order for delivery of desired contents to the EMD server 2, reception of contents that have arrived, authentication of information such as a user's individual ID number and password, and charge processing. Although having a memory to store contents received from either the host unit 3 or the EMD server 2, and a music replay unit to replay the contents, the user device 4 has not a host function so as to meet demands for compact and lightened design. The memory is composed of recording mediums with small amounts of memory capacity, which are built-in memories (such as semiconductor flash memories) or solid-state memories (such as memory sticks or compact flashes).

According to the host function based on the SDMI, the duplication of contents, which is refereed to as a "checkout," is allowed. This way of duplication enables users to duplicate contents up to the number of allowable duplicate times. Whenever the contents are checked out at other devices, the number of allowable duplicate times is reduced one by one. In contrast to the checkout, a "checkin" is carried out to return contents from other devices. Every time contents are checked in, the number of allowable duplicate times is increased one by one. Besides such checkout and checkin techniques, a move of contents is allowed through a technique known as MOVE, though duplications are not carried out. Hence, contents are moved to other devices without changing the number of allowable duplicate times.

To limit the number of allowable duplicate times, both of pieces of information showing the number of allowable duplicate times and pieces of information showing the prohibition of duplications between devices each having no appropriate host function are added to contents delivered from the EMD server 2.

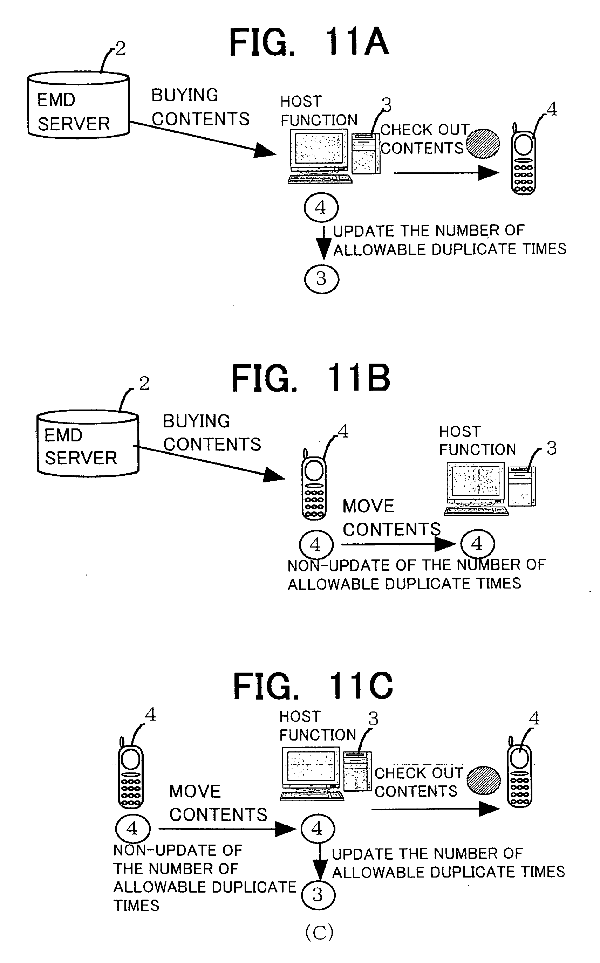

For instance, in Fig. 11A, when receiving contents, which are limited in the number of allowable duplicate times, delivered from the EMD server 2, the host unit 3 stores the delivered contents into its HDD unit. Hence, the music replay unit provided with the host unit 3 is permitted to replay the contents. The stored contents in the HDD unit can be checked out at the mobile type of user device 4 via its interface (I/F), so that the music replay unit in the device 4 is able to replay the delivered contents at a going-out place.

Whenever such a checkout is carried out, the number of allowable duplicate times assigned to the contents, which is recorded at the HDD unit of the host unit 3, is reduced by one. Hence if the number of allowable duplicate times is four times, the number becomes zero after the contents are checked out at each of four user device 4 at maximum. As a result, further checkouts of the contents at other user devices 4 will be prohibited. In other words, the number of allowable duplicate times corresponds to the number of duplications assigned to the simultaneous use of the same contents.

Meanwhile, in cases where particular contents stored by the memory of one of the mobile type of user devices 4 are checked in at the host unit 3, its number of allowable duplicate times is restored by one. A further checkout of the contents at the user device 4 is allowed within the number of allowable duplicate times.

In Fig.11B, the mobile type of user device 4 receives contents delivered directly from the EMD server 2 on the Internet 1 with the help of the mobile unit communication means. The delivered contents are stored in the memory of the device 4, so that its music replay unit can replay the contents. The memory of the user device 4 is generally smaller in a memory capacity, and cannot memorize large amounts of contents. When the memory becomes full, a further delivery of contents from the EMD server 2 or a further checkout of contents from the host unit 3 cannot be executed any more, unless a necessary memory area for contents to be received newly is secured in the memory of the device 4. That is, any contents stored so far in the memory should be moved to the host unit 3 or any unnecessary contents should be deleted from the memory.

In Fig. 11C , a certain mobile type of user device 4 receives contents delivered directly from the EMD server 2 on the Internet 1. The contents thus received are then moved to the HDD unit of the host unit 3 to be stored therein, before being checked out at another user device 4.

In this case, it can be supposed that the number of allowable duplicate times assigned to the contents delivered from the EMD server 2 to the user device 4 is four. In such situation, the number of allowable duplicate times will not be changed at the host unit 3, with the number of four kept. Like the situation in Fig. 11B, the checkout and checkin can then be repeated to and from the user device 4 under a limited number of allowable duplicate times assigned to four. This makes it possible to replay the contents by the music replay unit of the host unit 3 or each user device 4.

However, the memory provided with the user device 4 is mostly limited in capacity to make the device compact and light and to reduce amanufacturing cost thereof. In general, the memory capacity is about 64M bytes. In the case that MP3 data are adopted, the volume of data of one piece of music is approximately 5M bytes (which is also true of ATRAC3 data), the entire memory is occupied by data as fewer as about ten pieces of music contents.

In the foregoing information delivery system, an amount of contents which can be replayed by using the mobile type of user device 4 at a going-out place is therefore limited to, for example, a value corresponding to about 10 pieces of music which can be stored in the memory. If further contents are desired to be replayed, the contents stored in the user device 4 should be partly or entirely deleted, or once moved to the host unit 3, which is in most cases placed at the home, thus providing an empty memory area in the user device. Desired contents can then be checked out from the host unit 3 or bought from the EMD server 2.

However, whatever the deletion of already-recorded contents may be done to obtain an empty memory space, it will cause an inconvenient situation that if the same contents are desired again, the user has to buy the contents again from the EMD server 2, being costly and uneconomical for users. In addition, when a user is out and it is required for the user to delete contents from the user device 4 to the host unit 3 placed at the user's home, the user has to go home.

Moreover, the contents bought from the EMD server 2 by using the mobile type of user device 4 cannot be checked out directly at other user devices 4, because the device 4 does not have the host function as described before. If such a checkout is needed, contents must temporarily be moved to the host unit 3, before they are checked out at another user device 4. This manner will impose troublesome operations on users.

Still further, to receive contents by the mobile type of user device 4 needs mobile unit communication means to be used. Because such means is fairly higher in communication charge (call charge) than the ordinary home-use line, frequent communications of contents of which data amount is larger is costly.

By the way, a recent greater advancement in car navigation systems making use of artificial satellites is enough for us to imagine that use of car-mounted audio devices are generalized in the near future. That is, data of contents are delivered from the EMD server 2 to a car-mounted audio device to be replayed on the car. However, the same inconveniences and drawbacks as those for the foregoing user device 4 are true of the car-mounted audio devices.

### SUMMARY OF THE INVENTION

It is therefore an object of the present invention to provide a digital information storage system and a digital information delivery system that allows to greatly improve facility when users handle bought digital information.

The above object of the present invention can be achieved by a digital information storage system connected with a network, digital information delivered through the network responsively to instructions originated from a user device handled by a user being stored in the storage system and the number of duplicate times assigned to each piece of the digital information being limited, provided with: a storage for storing therein the delivered digital information; and a host-function device for performing host function including management of a duplicate condition of the stored digital information and control of input/output actions for the digital information stored in the storage in response to further instructions sent through the network from the user device.

Here, the host function in the present invention is defined by management of formats and history of duplications of digital information of which number of duplication times is limited, allowance of duplications of the information within a range up to an allowed number of times, and control of prohibiting a duplication of the information when the duplication exceeds the allowed number of times. The storage in the present invention is storage device into which a user is able to store and preserve digital information on the digital information storage system, the digital information being bought from, for example, an EMD server managed and operated by a company having the distribution right of contents corresponding to the digital information.

In addition, to authenticate a duplication-requesting user device about whether or not it is owned by a legal user recorded in the storage, the digital information storage system of the present invention is able to memorize user authentication information, such as users' IDs to identify users and their passwords. On a duplication is requested, the user authentication information is received from a user device to perform the authentication, preventing the digital information from being stolen by peoples who are not approved by a qualified user. The user device according to the present invention has a memory for digital information and communication device responsible for communication with the digital information storage system and others. Additionally, the user device includes a mobile type of user device (such as a cellular phone, PHS, and PD) and on-vehicle audio units. The digital information includes digital information produced from materials, such as music and video.

According to the present invention, digital information is stored in the storage of the digital information storage system. A user bought the digital information from the server built on the network by using the user device and possesses it in the storage. The digital information has a limited number of duplication times. The host-function device of the digital information storage system operates based on instructions sent through the network from the user device and duplicate conditions of the stored digital information. The host-function device enables not only the delivery (output) of the storage-stored digital information to the user device via the network but also the return (input) of the digital information from the user device to the storage via the network.

Thus, when a user is out, the user is able to receive digital information from the digital information storage system. Even when the memory is filled with digital information, the digital information can be returned partly or entirely to the digital information storage system when it is required. This avoids the uneconomical condition that digital information should be deleted from the user device or the inconvenience that a user has to go home to move digital information to a host unit installed at the home. Therefore, handling digital information can greatly be improved in facility. Furthermore, frequent communication of contents of which data amount is larger can be suppressed, lowering a considerable amount of cost.

In one aspect of the digital information storage system of the present invention, the host-function device includes receiving a request for outputting a designated piece of the digital information, determining, on the basis of the duplicate condition of the designated piece of the digital information, whether or not the designated piece of the digital information is allowed to be outputted, and delivering the designated piece of the digital information to the user device through the network only when the determination has been made such that the designated piece of the digital information is allowed to be outputted.

According to this aspect, the digital information storage system on the network is able to handle the digital information in a steady manner on the basis of the duplicate condition of the digital information.

In another aspect of the digital information storage system of the present invention, the storage is provided so as to correspond to authentication information owned by each user who utilizes each user device.

According to this aspect, each user is capable of storing self-bought digital information, there is no confusion between or among users.

The above object of the present invention can be achieved by a digital information delivery system connected with a network to deliver digital information responsively to a request from a user device, the number of duplicate times assigned to the digital information being limited, provided with: a database for storing therein the digital information to be delivered to a user who utilizes the user device; a storage for storing therein a piece of the digital information requested from the user device through the network; and a host-function device for performing a host function including management of a duplicate condition of the stored digital information and control of input/output actions for the digital information stored in the storage in response to further instructions sent through the network from the user device.

According to the present invention, a piece of digital information stored in the database and requested from the user device through the network is stored in the storage. The stored digital information is limited in the number of duplicate times. The host-function device operates based on instructions sent through the network from the user device and duplicate conditions of the stored digital information. The host-function device enables not only the delivery (output) of the storage-stored digital information to the user device via the network but also the return (input) of the digital information from the user device to the storage via the network.

Thus , when a user is out, the user is able to receive digital information from the digital information storage system. Even when the memory is filled with digital information, the digital information can be returned partly or entirely to the digital information storage system when it is required. This avoids the uneconomical condition that digital information should be deleted from the user device or the inconvenience that a user has to go home to move digital information to a host unit installed at the home. Therefore, handling digital information can greatly be improved in facility. Furthermore, frequent communication of contents of which data amount is larger can be suppressed, lowering a considerable amount of cost.

Moreover, a communication cost required for transmitting digital information, of which number of duplicate times is limited, from the database to the storage via the network can be lowered. Particularly, in cases where the same company is in charge of both management of the database to provide digital information of which number of duplicate times is limited to a certain amount and supply of the storage, the system can be simplified further, being effective in making the system more compact.

In one aspect of the digital information delivery system of the present invention, the host-function device includes receiving a request for outputting a designated piece of the digital information, determining, on the basis of the duplicate condition of the designated piece of the digital information, whether or not the designated piece of the digital information is allowed to be outputted, and delivering the designated piece of the digital information to the user device through the network only when the determination has been made such that the designated piece of the digital information is allowed to be outputted.

According to this aspect, the digital information storage system on the network is able to handle the digital information in a steady manner on the basis of the duplicate condition of the digital information.

In another aspect of the digital information delivery system of the present invention, the storage is provided so as to correspond to authentication information owned by each user who utilizes each user device.

According to this aspect, each user is capable of storing self-bought digital information, there is no confusion between or among users.

The above object of the present invention can be achieved by a digital information delivery system connected with a network to deliver digital information responsively to a request given from a user device, the number of duplicate times assigned to the digital information being limited, provided with: a database for storing therein the digital information to be delivered to a user who utilizes the user device; a storage for storing therein both identification information and duplicate management information in relation to a piece of the digital information requested from the user device through the network; and a host-function device for performing a host function of controlling delivery of the requested piece of the digital information from the database on the basis of both the identification information and the duplicate management information stored in the storage.

According to the present invention, instead of storing actual digital information, identification information and duplicate management information are stored in the storage. The host-function device operates based on instructions sent through the network from the user device and duplicate conditions of the stored digital information. The host-function device enables not only the delivery (output) of the database-stored digital information to the user device via the network but also the return (input) of the digital information from the user device to the database via the network. That is, this provides the identical advantages to the configuration in which digital information is stored in the storage. Further, labor required to transmit digital information, of which data amount is larger, from the database to the storage can be reduced.

In one aspect of the digital information delivery system of the present invention, the host-function device includes determining, on the basis of the duplicate management information corresponding to the requested piece of the digital information, responsively to a request from the user device, whether or not the requested piece of the digital information is allowed to be delivered, and delivering the requested piece of the digital information from the database to the user device through the network only when the determination has been made such that the requested piece of the digital information is allowed to be delivered.

According to this aspect, the digital information storage system on the network is able to handle the digital information in a steady manner on the basis of the duplicate condition of the digital information.

In another aspect of the digital information delivery system of the present invention, the storage is provided so as to correspond to authentication information owned by each user who utilizes each user device.
According to this aspect, each user is capable of storing self-bought digital information, there is no confusion between or among users.

The above object of the present invention can be achieved by a digital information storage system connected with a network, information in relation to digital information delivered from a delivery server through the network being stored in the storage system and the number of duplicate times assigned to the digital information being limited, provided with: a storage for storing therein both authentication information and duplicate management information in relation to a piece of digital information requested from the user device through the network; and a host-function device for performing a host function of commanding the delivery server to deliver the requested piece of the digital information to the user device on the basis of instructions originating from the user device handled by a user through the network and the duplicate management information corresponding to the requested piece of the digital information.

According to the present invention, instead of storing actual digital information, identification information and duplicate management information are stored in the storage. The host-function device operates based on instructions sent through the network from the user device and duplicate conditions of the stored digital information. The host-function device enables not only the delivery (output) of the delivery-server-stored digital information to the user device via the network but also the return (input) of the digital information from the user device to the delivery server via the network. That is, this provides the identical advantages to the configuration in which digital information is stored in the storage. Further, a communication cost required to transmit digital information, of which data amount is larger, to the storage can be reduced.

### BRIEF DESCRIPTION OF THE DRAWINGS

Fig. 1 shows the configuration of a contents-delivery system according to an embodiment of the present invention;
Fig. 2A exemplifies the configuration of a mobile type of user device according to the embodiment;
Fig. 2B exemplifies the configuration of an EMD server used in the embodiment;
Fig. 2C exemplifies the configuration of a storage server adopted by the embodiment;
Fig. 3 pictorially illustrates an order of contents;
Fig. 4 is a flowchart outlining the procedures needed to order contents;
Fig. 5A pictorially shows a checkout of contents from the storage;
Fig. 5B is a pictorial illustration for a checkin at the storage;
Fig. 6 outlines a flowchart for the procedures needed to check out contents;
Fig. 7 pictorially shows the checkouts of contents to a plurality of mobile type of user devices;
Fig. 8 is an outlined flowchart showing the procedures required for the checkin at the storage;
Fig. 9 exemplifies the configuration of an EMD server used in another embodiment;

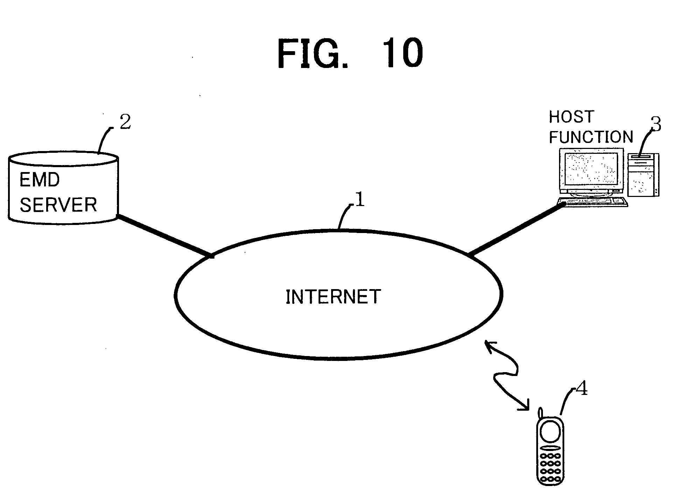

Fig. 10 exemplifies the configuration of the conventional contents-delivery system; and
Figs. 11A to 11C are illustrations of usage of the conventional contents-delivery system.

### DETAILED DESCRIPTION OF THE PREFERRED EMBODIMENTS

The following embodiments are directed to a contents-delivery system to which the present invention is applied. Copyrights of contents handled in the following embodiments are preserved and the number of duplicate times is limited to a certain amount. Namely, the number of duplications usable simultaneously has a limitation.

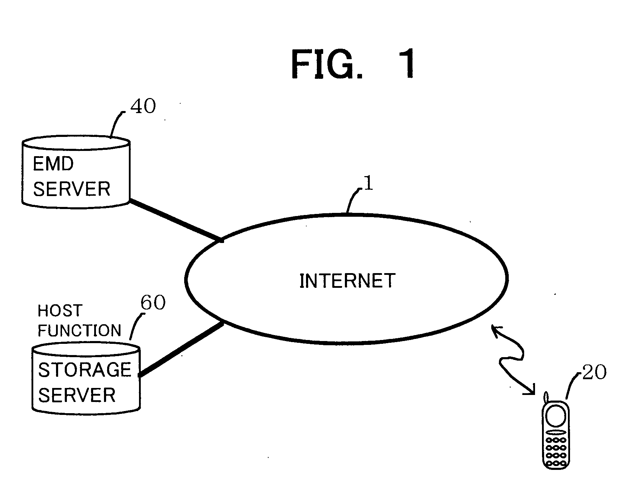

The contents-delivery system will now be described according to the present embodiment shown in Fig. 1.

The contents-delivery system is provided with a mobile type of user device 20, an EMD server 40, and a storage server 60. A user is able to carry the user device 20 and use it any place. The EMD server 40 is established on the Internet serving as a network and managed by a company who sells (delivery) contents on the Internet. The storage server 60 as a digital information storage system managed by a company who provides service for storage of contents on the Internet.

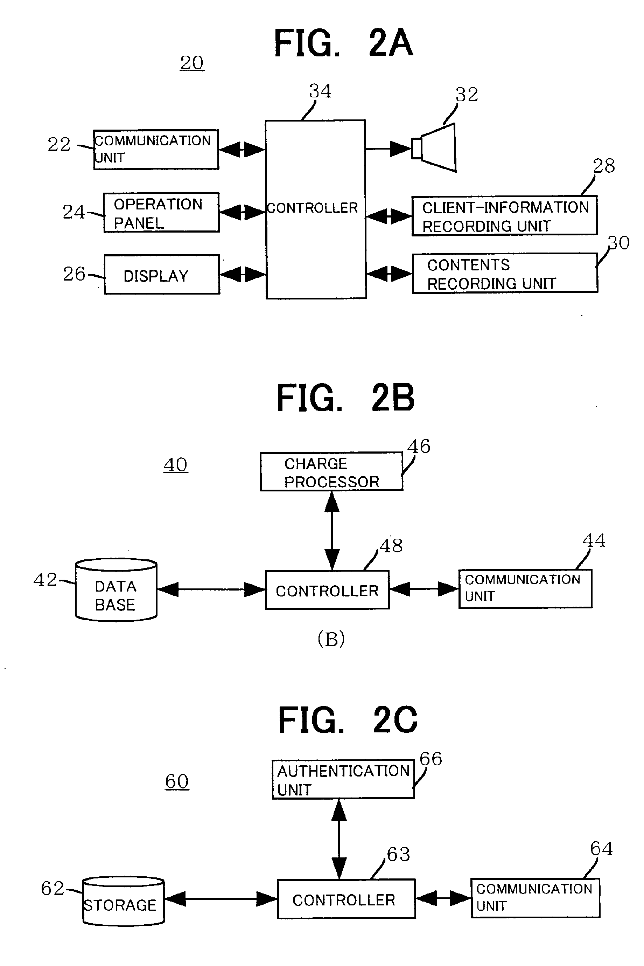

Fig. 2A exemplifies the configuration of the mobile type of user device 20.

The user device 20, which is connected with the Internet via mobile unit communication means, has a communication unit 22, an operation panel 24, a display 26, a client recording unit 28, a contents recording unit (memory) 30, a music replaying unit 32, and a controller 34. Of these units, the communication unit 22 is in charge of transmitting and receiving a variety of types of information including contents. The operation panel 24 is used to give various types operational signals to the system. The display represents a variety of types of information as well as contents of operations performed through the operation panel 24. Further, the client recording unit 28 is responsible for recording therein various pieces of information, including information required for charge processing and confirmation of users, and information indicative of the URLs of the EMD and storage servers 40 and 60. The contents recording unit 30 is able to memorize contents that have been given from the storage server 60. The music replaying unit 32 replays contents memorized in the contents recording unit 30 so as to output the replayed data. The controller 34 is responsible for controlling the operations of the foregoing constituents.

The mobile type of user device 20 functionally has a client function for ordering contents and commanding the delivery of the ordered contents. Software is installed in the controller 34. The software is written to realize various functions. A first function is that the communication unit 22 establishes a connection with the EMD server 40 on the Internet using the URL information recorded in the client-information recording unit 28, specifies desired contents (object) to be ordered from the contents stored in a database 42 of the EMD server 40, and notifies the EMD server 40 of the specified contents as well as information necessary for charge processing and user identification (that is, an order function). A second function causes communication unit 22 to use the URL information recorded in the client-information recording unit 28 so as to establish a connection with the storage server 60, and then to notify the storage server 60 of information necessary for user identification, which is stored in the client-information recording unit 28.

Fig. 2B exemplifies the configuration of the EMD server 40, in which there are provided a database 42, a communication unit 44, a charge processor 46, and a controller 48. In the database 42, stored are the contents of each piece of music of which distribution rights are possessed by a server's management and operation company. The communication unit 44 performs communication with both the mobile type of user device 20 and the storage server 60 via the Internet. The charge processor 46 operates to conduct charge processing necessary for accepting an order for contents from the user device 20. The controller 48 engages in control of the operations of the database 42, communication unit 44, charge processing 46, and others.

Contents to be stored into the database 42 is composed of primary performance data composed of pieces of music converted into the digital form (if necessary, additionally compressed based on a predetermined format such as MP3), attribute data, and attached data. The attribute data show attributes of each piece of music such as its title, the name of a performer(s), the name of a producing company, and others. The attached data include data representing the number of allowable duplicate times assigned to each piece of music. To the contents is additionally attached an attribute to prohibit a duplication between devices with no standard host function.

Fig. 2C exemplifies the configuration of the storage server 60. The storage server 60 includes, as shown therein, a storage 62 as a storage, a communication unit 64, an authentication unit 66, and a controller 68. The storage 62 is able to memorize(storage) contents bought by a user from the EMD server 40 through the user device 20. The communication unit 64 performs communication with both the user device 20 and the EMD server 40 via the Internet. Base on information provided from the user device 20, the authentication unit 66 carries out the authentication of a user. Further, the controller 68 controls the operations of the storage 62, communication unit 64, and authentication unit 66.

Specifically, the controller 68 as a host-function device has a host function composed of various types of control functions. One control function is management of both duplication formats and histories of contents on the basis of for example the foregoing SDMI, during which time a duplication of information is allowed if the number of duplicate times accumulated so far does not exceed a predetermined allowable amount, whilst the duplication is prohibited if such requirement is not satisfied. A second control function is input/output control of contents via the Internet between the storage 62 and the mobile type of user device 20, which is carried out responsively to an Internet-routed command from the user device 20.

Practically, based on a command coming from the user device 20 through the Internet, the control is carried out such that specified contents stored in the storage 62 are outputted to the user device 20 via the Internet or contents are inputted from the user device 20 through the Internet.

In the present delivery system, a user is able to use the client function of the user device 20 in order to issue an order for desired contents toward the EMD server 40.

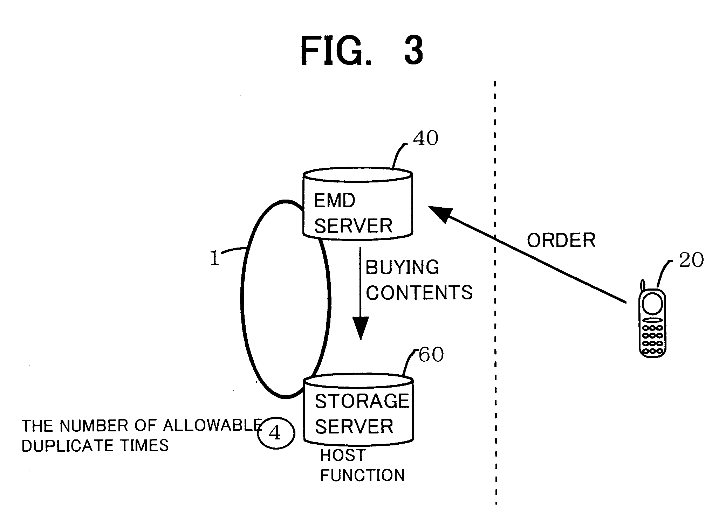

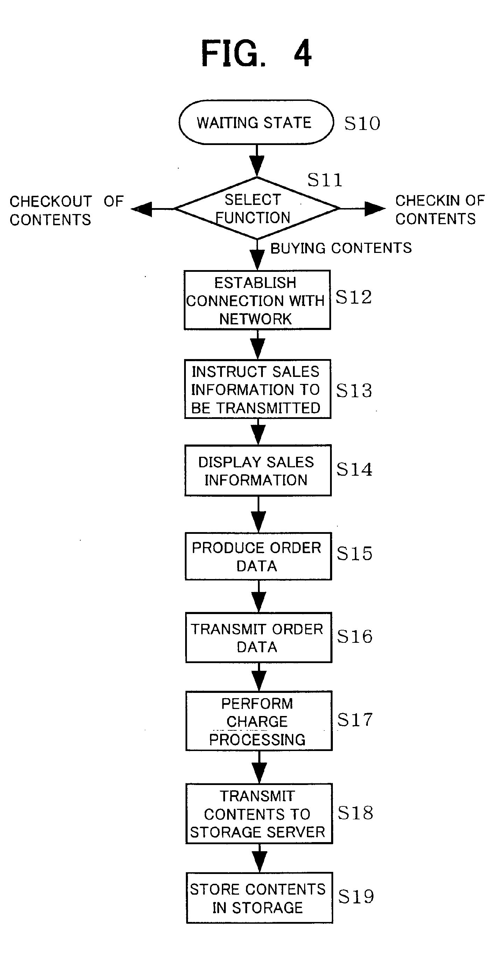

Fig. 3 is a pictorial illustration showing an order for desired contents, while Fig. 4 exhibits a flowchart of the procedures to order the desired contents.

A user operates the operation panel 24 of the mobile type of user device 20 that has been under a waiting state (step S10 in Fig.4). The operation permits the user devices 20 to represent a function-selecting screen on the display thereof (step S11).

The function-selecting screen includes the function menus consisting of "buying contents," "checkout of contents," and "checkin of contents." The user is obliged to select one function from the function-selecting screen. If the menu of the "buying contents" is selected, the procedures for ordering desired contents are started.

In cases where the "buying contents" has been selected on the function-selecting screen, the processing proceeds to step S12. At step S12, the user device 20 uses information about the URLs stored in the clients' information recording unit 28 to establish a connection with the EMD server 40 on the Internet.

The processing then proceeds to step S13, at which the user device 20 instructs the storage server 60 to provide with the user device sales information about the contents to which the user is able to order. After this, the user device 20 receives the sales information that has been transmitted form the EMD server. The sales information includes list-formatted information useful for the user to decide an object to order, such information including, contents by contents, the title of music, the name of a performer(s), the name of a producing company, and a price.

The processing then goes to step S14, at which the user device 20 displays the received sales information in a list format, for example, classified on categories, which is convenient for the user in selecting desired contents. The displayed screen urges the user to designate desired contents.

When the user has operated the operation panel to designate an object (contents) to order, the processing is then shifted to step S15, at which the user device 20 produces order data to be transmitted to the EMD server 40. The order data include data to specify desired contents, that is, an object to order. Additionally, the order data includes a user's account number and a user's password required by the EMD server 40 to perform charge processing, a user's ID and its password required for the authentication of the user, and URL information indicative of the storage server 60 in charge of storage service of contents. The order data are automatically produced in a predetermined format by making the controller 34 refereeing to information stored in the storage 28.

The processing is then carried out at step S16, at which the order data is transmitted to the EMD server 40 via the Internet.

When having received the order of contents from the user device 20, the EMD server 40 activates the charge processor 46 so as to perform predetermined charge processing (step S17). The EMD server 40 successively transmits the ordered contents to the storage server 60 specified by the URL, together with information, such as the user's ID, necessary for the authentication of the user (step S18).

In response to the reception of the ordered contents from the EMD server 40, the storage server 60 obtains in the storage 62 a memory area for the user who ordered, and stores the received contents, together with information, such as the user's ID, necessary for the authentication of the user (step S19). That is, the storage 62 is made to correspond to each user through each user's ID or others.

The user is thus able to buy the desired contents from the EMD server 40 and store them in the storage 62 of the storage server 60. Then, using the client function of the mobile type of user device 20, the user is able to check out (output) the desirably bought contents from the storage 62 of the storage server 60 via the Internet.

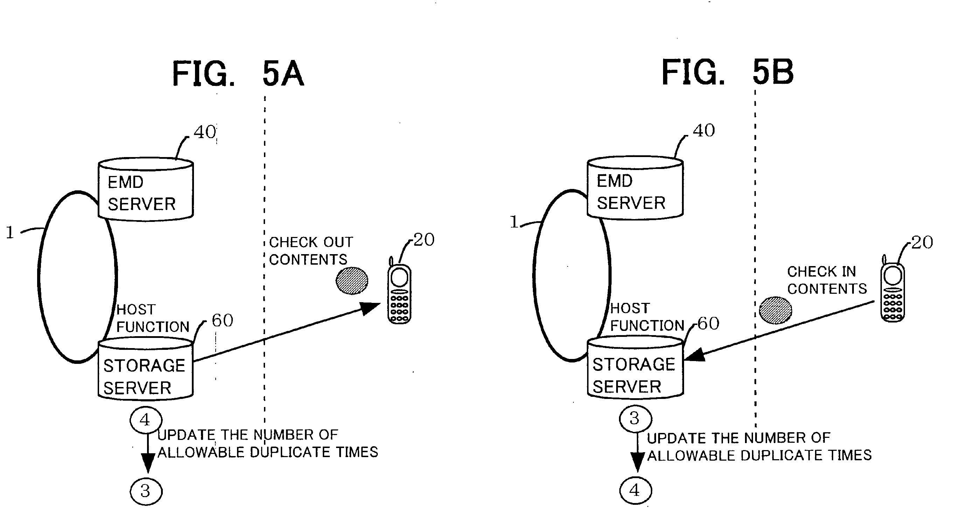

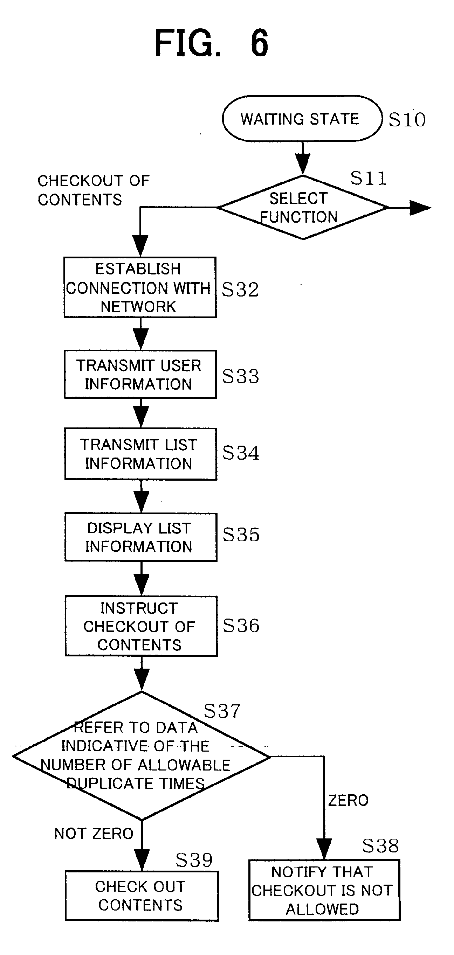

Fig. 5A is a pictorial illustration for the checkout of contents from the storage 62, and Fig. 6 shows a flowchart consisting of the procedures for the checkout of contents.

In this case, like the processing shown in Fig. 4, the mobile type of user device 20 under the waiting condition (step S10) is driven so that the function-selecting screen is presented on the display 26 thereof (step S11). When the "checkout of contents" being selected from the function-selecting screen, the checkout procedures for desired contents are commenced. In response to this commencement, the user device 20 uses the pieces of URL information stored in the client-information recording unit to establish a connection with the storage server 60 on the Internet (step S32).

The processing is moved to step S33, at which the user device 20 transmits to the EMD server 40 information, such as a user's ID, that is necessary to identify the user. The storage server 60 operates successively at step S34, at which the storage server 60 drives its authentication unit 66 in such a manner that it authenticates the user, and then transmits, as list information, the types of contents recorded/stored for the user. This list information includes the titles of contents, the names of performers, the names of producing companies, and others, which are required for the user to decide an object to be delivered.

The processing is then carried out at step S35, at which the user device 20 represents on the display 26 the list information that has been received from the storage server 60. During the presentation of the list information, it is requested that the user designate desired contents to be checked out. When the user designates desired one, the processing is shifted to step S36, at which the user device 20 instructs the storage serer 60 to check out the desired contents.

Responsively to the instructions to check out the contents, the storage server 60 operates at step S37 such that it makes reference to the data indicative of the number of allowable duplicate times assigned to the contents. If this reference shows that the number of allowable duplicate times has been zero, with no checkout performed, the notification that the checkout will not be performed is issued from the storage server 60 to the user device 20 (step S38). In contrast, the number is not zero, the storage server 60 not only checks out the designated contents toward the user device 20 via the Internet but also updates the data indicative of the number of allowable duplicate times assigned to the designated contents stored in the storage 62, by decreasing the number by one (step S39).

The checked out contents are recorded in the storage 30 of the user device 20, so that adding necessary operations to the operation panel 24 enables the contents to be replayed from the replay unit.

In the case that the number of allowable duplicate times assigned to the designated contents is two or more, the user is allowed to check out the contents to two or more mobile type of user devices 20.

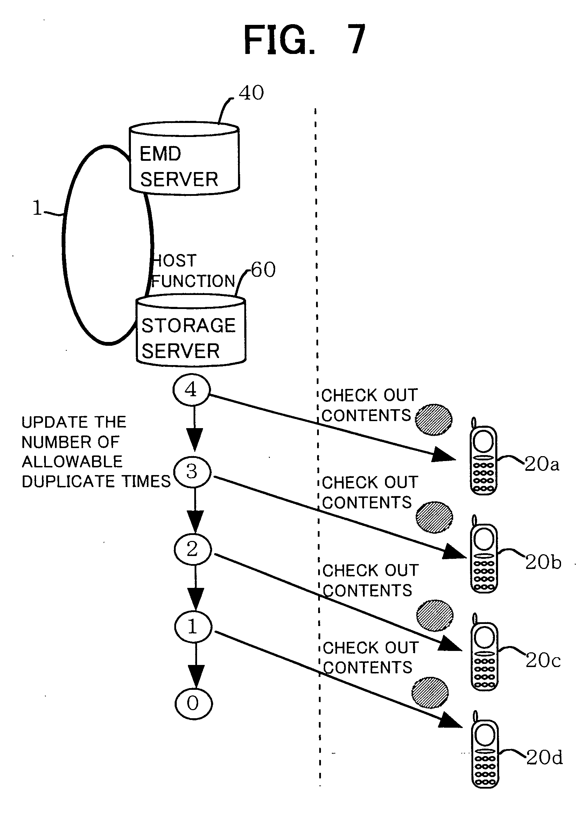

Fig. 7 pictorially shows the checkouts of the same contents to a plurality of mobile type of user devices 20.

In Fig. 7, in the case that the number of allowable duplicate times assigned to contents to be checked out is four, the checkouts for a plurality of user devices are carried out in the following manner. The foregoing checkout procedures are applied to a first user device 20a, so that the contents that have been checked out are recorded in the contents recording unit 30 of the user device 20a. As a result, this user device 20a is able to replay the checked out contents at any time. Moreover, through the processing carried out at step S39, the storage server 60 updates the number of allowable duplicate times assigned to the present contents from four to three.

The foregoing checkout procedures can then be applied to a second user device 20b. Hence, if the user desires that the second user device 20b be subject to the checkout of the same contents, the contents that have been checked out are recorded in the contents recording unit 30 of the user device 20b. As a result, this user device 20b is able to replay the checked out contents at any time. Moreover, through the processing carried out at step S39, the storage server 60 updates the number of allowable duplicate times assigned to the present contents from three to two. In this checkout, the second user device 20b shares the information, such as the user's ID, which is necessary for identifying the user, with the first user device 20a. The second user device 20b therefore uses the user's ID to carry out the procedures for requesting the checkout toward the storage server 60.

Similarly, the checkout procedures can be applied to a third user device 20c, then to a fourth user device 20d, in turn, if the user desires such checkout(s). In this case, the third and fourth user devices 20c and 20d share user-identifying information such as a user's ID with the first user device 20a, so the third and fourth ones 20c and 20d use the same information to have the same contents checked out.

Thus, without intervening a stationary type of apparatus having the host function and via communication means with a mobile unit communication network, even from a going-out place, the same contents can be made use of by a plurality of mobile type of user devices. For instance, one of the family members or friends buys contents, the remaining members can use them together, enhancing facility for the users.

In the example of Fig. 7, whenever the checkouts of the requested contents have completed toward all the first to fourth user devices 20a to 20d, the number of allowable duplicate times assigned to the requested contents is reduced to zero at the storage 62 of the storage server 60. Hence if another request for checking out the same contents is issued after the completion from the other mobile type of user devices, the storage server 60 notifies the other user devices of the fact that the requested contents will not allowed to be checked out (step S38). This way prohibits endless duplications of the same contents, protecting benefit of authors, such as copyrights.

On the other hand, using the client function of the mobile type of user device 20 enables a user to checkin the contents, which were checked out toward the user device 20 in the past, into the storage 62 of the storage server 60.

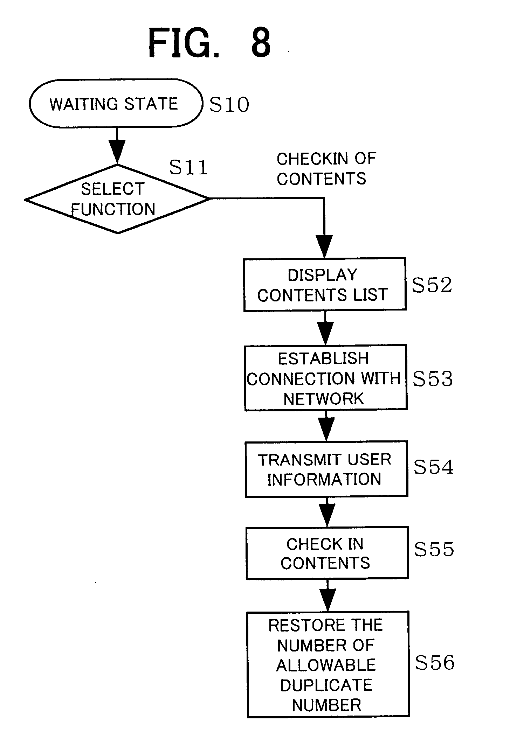

Fig. 5B is a pictorial illustration for checking in designated contents into the storage 62, while Fig. 8 is an outlined flowchart showing the procedures of such checkin.

The procedures of the checkin are launched as below. The mobile type of user device 20, which is now under the waiting condition (step S10), is driven so that the function-selecting screen is presented on the display 26 thereof (step S11) through operating the operation panel 24. When the "checkin of contents" being selected from the function-selecting screen, the processing is moved to step S52. At step S52, the user device 20 operates so as to represent on the display 26 a list of all the contents recorded in the contents recording unit 30, and urges the user to designate a desired piece of contents to be returned to the storage 62 (checkin).

After a desired piece of contents has been designated on the displayed list, the user device 20 uses the pieces URL information stored in the client-information recording unit 28 to establish a connection with the storage server 60 on the Internet (step S52).

The processing is then shifted to each of steps S54 to S56. At step S54, the user device 20 transmits to the storage server 60 information necessary for identifying the user, such as the user's ID. At step S55, the user device 20 then performs the checkin of the desired contents at storage 62 through the Internet, and deletes the contents that have been subject to the checkin. Practically, the actual checkin is carried out such that the contents themselves will not returned to the storage server 60, only control data for the checkin are transmitted to the storage server 60, so that a communication cost for the checkin can be reduced noticeably.

At step S56, the storage server 60 uses information such as the user's ID to gain access to a desired user file stored in the storage 62, confirms the contents checked in by the user device 20, and restores (updates), by one, the number of allowable duplicate times assigned to the checked-in contents.

As described above, the present delivery system allows a user who is out to use the mobile type of user device 20 on a mobile unit communication such that desired contents are checked in at the storage 62 of the storage server 60 via the Internet. For example, a user frequently encounters the situation that the contents storing unit 30 of the user device 20 is filled with contents, but an empty memory region is still desired in the unit 30 to receive other checked-out contents. In such a case, inconvenient and uneconomical situation, in which a user has to go home to check in particular contents at a stationary apparatus having the host function or delete particular data from the user device 20, can be avoided. Further, contents of which amount of data is larger can be avoided from being communicated frequently, thereby leading to a greatly reduced communication cost. As a result, the convenience in dealing with digital information can be raised greatly.

The foregoing embodiment has exemplified one configuration of the contents-delivery system, but various modifications can be provided. For example, the foregoing construction of storing the contents into the storage 62 of the storage server 60 may be modified as follows. Information necessary for authentication of users, information indicative of contents possessed by each user (attribute information, such as the titles of pieces of music and the names of performers), and the number of allowable duplicate times are stored in the storage 62. In this modification, the storage server 60 is configured to respond to a checkout request issued from a user so as to command the EMD server 40 to deliver particular contents requested by the user. This configuration is also able to provide the advantage that a communication cost for transmission of contents from the EMD server 40 to the storage server 60 can be lowered, in addition to the similar advantages to those gained in the embodiment shown in Fig. 1.

A further modification may be provided as a system in which both of a storage and host-function device which are configured similarly to those provided with the foregoing storage server are equipped with the EMD server. Fig. 9 exemplifies the configuration of an EMD server 80 used in this case. As a result, the EMD server 80 functions as the digital information delivery system of the present invention. The EMD server 80 is constructed such that, responsively to an order of contents issued from the mobile type of user device 20, the contents are transferred from the database 82 to the storage 85 to be stored therein, together with information necessary for authentication of users , such as users' IDs. Like the foregoing embodiment, the host function allows contents to be appropriately checked out or checked in, in response to a command issued from the user device 20. This configuration provides the identical advantages to those in the embodiment shown in Fig. 1. Moreover, a communication cost required for transmitting contents from the EMD server to the storage server can be lowered. Particularly, in cases where the same company operates and manages both of the EMD server and the storage server, the system can be simplified further, being effective in making the system more compact.

A still further embodiment can be configured into a system in which various pieces of information are memorized and managed by the storage 85 of the EMD server 80. Such pieces of information include information necessary for authentication of users, information indicative of contents possessed by each user (attribute information such as a title and the names of one or more performers), and information about the number of allowable duplicate times assigned to each piece of contents. In this system, like the foregoing embodiment, the host function may allow contents to be appropriately checked out or checked in, in response to a command issued from the user device 20. This configuration provides the identical advantages to those in the embodiment shown in Fig. 1. Additionally, an operational labor to transfer contents from the database to the storage can also be decreased.

Furthermore, the foregoing embodiment has been directed to digital music information employed as one kind of contents, but the contents are not limited to this one. The contents can include other digital information, such as digital video information, to which a certain limited number of duplicate times is assigned in order to preserve the copyright.

Further, in the foregoing embodiment, the way of limiting the number of duplicate times based on the regulations of the SDMI has been exemplified. With this respect, the present invention is not limited by how to limit the number of duplicate times. Any way is applicable, provided that the number of duplicate times for digital information is limited for the purpose of preserving benefit that should be given authors or others.

In the foregoing embodiment, contents are transmitted from the EMD server 40 to the storage server 60 on the Internet. Alternatively, digital information about music, video or others can be stored in physical recording mediums, such as magnetic discs or optical discs, for delivery, which provides the similar advantages to those described before. Such configuration also falls into the scope of the present invention.

In addition, the foregoing embodiment has used the mobile type of user device 20 configured into a portable type of user device formed by a portable device, such as a cellular phone, with both the client function and the music replay function additionally given. An alternative user device may be a portable and on-vehicle type of user device realized by an on-vehicle audio unit with both the communication function and the client function additionally given. Such user device is able to provide the similar advantages described above and is included by the scope of the present invention.

As stated above, the foregoing embodiment and its various modifications provides has many advantages. When a user is out, the user is able to receive through a user device digital information, which is owned by the user and of which number of duplicate times is limited to a certain amount, from a user-dedicated storage built on a network. Even when the memory of the user device are filled with digital information, the digital information can be returned partly or entirely to the storage when it is required. This avoids the uneconomical condition that digital information should be deleted from the user device or the inconvenience that a user has to go home to move digital information to a host unit installed at the home. Furthermore, frequent communication of contents of which data amount is larger can be suppressed, lowering a considerable amount of cost. Therefore, handling digital information can greatly be improved in facility.

The invention may be embodied on other specific forms without departing from the spirit or essential characteristics thereof. The present embodiments therefore to be considered in all respects as illustrative and not restrictive, the scope of the invention being indicated by the appended claims rather than by the foregoing description and all changes which come within the meaning an range of equivalency of the claims are therefore intended to embraced therein.

## Claims

1. A digital information storage system(60) connected with a network(1), digital information delivered through the network(1) responsively to instructions originated from a user device(20) handled by a user being stored in the storage system(60) and the number of duplicate times assigned to each piece of the digital information being limited, **characterized in that** the system(60) comprises:
a storage(62) for storing therein the delivered digital information; and
a host-function device(68) for performing host function including management of a duplicate condition of the stored digital information and-control of input/output actions for the digital information stored in the storage(62) in response to further instructions sent through the network(1) from the user device(20).

2. The system(60) according to claim 1, wherein the host-function device(68) includes receiving a request for outputting a designated piece of the digital information, determining, on the basis of the duplicate condition of the designated piece of the digital information, whether or not the designated piece of the digital information is allowed to be outputted, and delivering the designated piece of the digital information to the user device(20) through the network(1) only when the determination has been made such that the designated piece of the digital information is allowed to be outputted.

3. The system(60) according to claim 1 or 2, wherein the storage(62) is provided so as to correspond to authentication information owned by each user who utilizes each user device(20).

4. A digital information delivery system(80) connected with a network(1) to deliver digital information responsively to a request from a user device(20), the number of duplicate times assigned to the digital information being limited, **characterized in that** the system(80) comprises:
a database(82) for storing therein the digital information to be delivered to a user who utilizes the user device(20);
a storage(85) for storing therein a piece of the digital information requested from the user device(20) through the network(1); and
a host-function device(83) for performing a host function including management of a duplicate condition of the stored digital information and control of input/output actions for the digital information stored in the storage(85) in response to further instructions sent through the network(1) from the user device(20).

5. The system(80) according to claim 4, wherein the host-function device(83) includes receiving a request for outputting a designated piece of the digital information, determining, on the basis of the duplicate condition of the designated piece of the digital information, whether or not the designated piece of the digital information is allowed to be outputted, and delivering the designated piece of the digital information to the user device(20) through the network(1) only when the determination has been made such that the designated piece of the digital information is allowed to be outputted.

6. The system(80) according to claim 4 or 5, wherein the storage(85) is provided so as to correspond to authentication information owned by each user who utilizes each user device(20).

7. A digital information delivery system(80) connected with a network(1) to deliver digital information responsively to a request given from a user device(20), the number of duplicate times assigned to the digital information being limited, **characterized in that** the system(80) comprises:
a database (82) for storing therein the digital information to be delivered to a user who utilizes the user device(20);
a storage(85) for storing therein both identification information and duplicate management information in relation to a piece of the digital information requested from the user device(20) through the network(1); and
a host-function device(83) for performing a host function of controlling delivery of the requested piece of the digital information from the database(82) on the basis of both the identification information and the duplicate management information stored in the storage(85).

8. The system(80) according to claim 7, wherein the host-function device(83) includes determining, on the basis of the duplicate management information corresponding to the requested piece of the digital information, responsively to a request from the user device(20), whether or not the requested piece of the digital information is allowed to be delivered, and delivering the requested piece of the digital information from the database(82) to the user device(20) through the network(1) only when the determination has been made such that the requested piece of the digital information is allowed to be delivered.

9. The system(80) according to claim 7 or 8, wherein the storage(85) is provided so as to correspond to authentication information owned by each user who utilizes each user device (20).

10. A digital information storage system(60) connected with a network(1), information in relation to digital information delivered from a delivery server(40) through the network (1) being stored in the storage system(60) and the number of duplicate times assigned to the digital information being limited, the system comprising:
a storage(62) for storing therein both authentication information and duplicate management information in relation to a piece of digital information requested from the user device(20) through the network(1); and
a host-function device(68) for performing a host function of commanding the delivery server(40) to deliver the requested piece of the digital information to the user device(20) on the basis of instructions originating from the user device (20) handled by a user through the network(1) and the duplicate management information corresponding to the requested piece of the digital information.
